# EUROPÄISCHE PATENTSCHRIFT

(11) **EP 3 004 898 B1**
(45) Veröffentlichungstag und Bekanntmachung des Hinweises auf die Patenterteilung: **14.12.2016**
(21) Anmeldenummer: 14727460.9
(22) Anmeldetag: 28.05.2014
(51) Int. Cl.: G01P 5/00, G01P 5/20

(54) **VERFAHREN ZUR ERMITTLUNG EINER SICH ÄNDERNDEN RÄUMLICHEN VERTEILUNG VON PARTIKELN ZU MEHREREN ZEITPUNKTEN**
METHOD FOR ASCERTAINING A CHANGING SPATIAL DISTRIBUTION OF PARTICLES AT MULTIPLE POINTS IN TIME
PROCÉDÉ DE DÉTERMINATION D'UNE DISTRIBUTION SPATIALE VARIABLE DE PARTICULES EN UNE PLURALITÉ D'INSTANTS

(30) Priorität: 31.05.2013 DE 102013105648
(43) Veröffentlichungstag der Anmeldung: 13.04.2016
(73) Patentinhaber: Deutsches Zentrum für Luft- und Raumfahrt e.V., 51147 Köln (DE); LaVision GmbH, 37081 Göttingen (DE)
(72) Erfinder: SCHRÖDER, Andreas, 37083 Göttingen (DE); SCHANZ, Daniel, 37073 Göttingen (DE); WIENEKE, Bernhard, 37073 Göttingen (DE)
(74) Vertreter: REHBERG HÜPPE + PARTNER
(86) Internationale Anmeldenummer: PCT/EP2014/061062
(87) Internationale Veröffentlichungsnummer: WO 2014/191461

(56) Entgegenhaltungen:
- EP-A1- 2 344 894
- HERING F ET AL: "PARTICLE TRACKING VELOCIMETRY BENEATH WATER WAVES. PART 1: VISUALIZATION AND TRACKING ALGORITHMS", EXPERIMENTS IN FLUIDS, SPRINGER, HEIDELBERG, DE, Bd. 23, Nr. 6, 1. Dezember 1997 (1997-12-01), Seiten 472-482, XP000777648, ISSN: 0723-4864, DOI: 10.1007/S003480050137
- RUHNAU P ET AL: "A variational approach for particle tracking velocimetry; A variational approach for particle tracking velocimetry", MEASUREMENT SCIENCE AND TECHNOLOGY, IOP, BRISTOL, GB, Bd. 16, Nr. 7, 1. Juli 2005 (2005-07-01), Seiten 1449-1458, XP020090638, ISSN: 0957-0233, DOI: 10.1088/0957-0233/16/7/007

## Beschreibung

### TECHNISCHES GEBIET DER ERFINDUNG

Die Erfindung betrifft ein Verfahren zur Ermittlung einer sich ändernden räumlichen Verteilung von Partikeln zu mehreren, in zeitlichen Abständen aufeinander folgenden Zeitpunkten, das für jeden der Zeitpunkte die im Oberbegriff des Patentanspruchs 1 aufgeführten Schritte aufweist.

Die Ermittlung der Verteilung der Partikel zu den verschiedenen Zeitpunkten kann insbesondere dem Zweck dienen, Strömungen eines Fluids, das mit den Partikeln beimpft ist, quantitativ zu erfassen. So können Geschwindigkeitsfelder der interessierenden Strömungen rekonstruiert werden. Dieses Vorgehen wird als Particle Tracking Velocimetry (PTV) bezeichnet.

Unter Partikeln, deren sich ändernde räumliche Verteilung erfasst wird, kann es sich anstelle von physikalischen Teilchen auch um andere aufgrund ihrer optischen Merkmale abbildbare physikalische Objekte handeln, wie beispielsweise Kanten, Dichteschwankungen, Maxima von Lichtintensitätsverteilungen usw.

### STAND DER TECHNIK

Ein Verfahren zur Bestimmung von Strömungsverhältnissen in einem von einem mit optisch detektierbaren Partikeln beimpften Fluid durchströmten Messvolumen, das für jeden von mehreren Zeitpunkten die im Oberbegriff des unabhängigen Patentanspruchs 1 aufgeführten Schritte umfasst, ist aus der DE 10 2009 009 551 B4 bekannt. Nach dem bekannten Verfahren wird zu jedem Zeitpunkt eine Mehrzahl zweidimensionaler, realer Bilder einer dreidimensionalen, realen Verteilung der Partikel mittels derselben Mehrzahl von räumlich versetzt zueinander angeordneten Bilddetektoren aufgenommen. Für jeden Bilddetektor wird eine Abbildungsfunktion bestimmt, mit der die reale Verteilung durch den Bilddetektor abgebildet wird. Für jeden Zeitpunkt wird weiterhin eine geschätzte räumliche Verteilung vorgegeben. Ausgehend von dieser geschätzten räumlichen Verteilung wird iterativ die reale räumliche Verteilung bis auf eine gewünschte Genauigkeit ermittelt. Dabei werden zweidimensionale, virtuelle Bilder der geschätzten Verteilung unter Anwendung der Abbildungsfunktionen berechnet. Unterschiede zwischen den virtuellen Bildern und den jeweils zugeordneten realen Bildern werden durch Vergleich ermittelt; und die geschätzte Verteilung wird in Abhängigkeit von den ermittelten Unterschieden verändert. Die Veränderung der geschätzten Verteilung erfolgt insbesondere hinsichtlich der Position der einzelnen Partikel. Jede Veränderung der geschätzten Verteilung kann einer Plausibilitätsüberprüfung unter der Annahme unterworfen werden, dass kein nicht-randständiges Partikel aus dem jeweiligen Messvolumen verschwinden kann.

Die konkrete Herkunft der Vorgabe für die geschätzte räumliche Verteilung soll bei dem aus der DE 10 2009 009 551 B4 bekannten Verfahren nicht von Bedeutung sein. Beispielsweise soll die Vorgabe für die geschätzte räumliche Verteilung der Partikel eine theoretisch berechnete Verteilung einer Anzahl geschätzter Partikel sein können, wobei die zahlenmäßige Abschätzung aus einer vom Versuchsaufbau her bekannten Partikeldichte resultieren können soll. Eine derartige Vorgabe erweist sich jedoch in der Praxis als ungeeignet, um ausgehend von der geschätzten räumliche Verteilung zielsicher die tatsächliche räumliche Verteilung mit der gewünschten Genauigkeit zu erreichen. Bei der praktischen Anwendung des aus der DE 10 2009 009 551 B4 bekannten Verfahrens werden daher andere Abschätzungsmechanismen verwendet werden, die sich auf dreidimensionale Rekonstruktionen der räumlichen Verteilungen aus den zu dem jeweiligen Zeitpunkt aufgenommenen zweidimensionalen realen Bilder stützen. Insbesondere lässt sich das Ergebnis einer vorab durchgeführten Bestimmung der Raumlagen der einzelnen Partikel basierend auf ihren Positionen in den realen Bildern mittels Triangulation als Vorgabe verwenden. Durch diese für jeden Zeitpunkt durchzuführende Triangulation ergibt sich ein großer Rechenaufwand zusätzlich zu den Iterationsschritten, um von der geschätzten räumlichen Verteilung zu der tatsächlichen räumlichen Verteilung zu gelangen. Außerdem ist die maximale Partikelkonzentration durch die Anwendungsgrenzen der Triangulation beschränkt.

### AUFGABE DER ERFINDUNG

Der Erfindung liegt die Aufgabe zugrunde, ein Verfahren zur Ermittlung einer sich ändernden räumlichen Verteilung von Partikeln zu mehreren, in zeitlichen Abständen aufeinander folgenden Zeitpunkten, das für jeden der Zeitpunkte die im Oberbegriff des Patentanspruchs 1 aufgeführten Schritte aufweist, aufzuzeigen, das mit besonders geringem Rechenaufwand eine genaue Bestimmung der tatsächlichen räumlichen Verteilung der Partikel mit der jeweils gewünschten Genauigkeit ermöglicht.

### LÖSUNG

Die Aufgabe der Erfindung wird durch ein Verfahren mit den Merkmalen des unabhängigen Patentanspruchs 1 gelöst. Die abhängigen Patentansprüche betreffen bevorzugte Ausführungsformen dieses Verfahrens.

### BESCHREIBUNG DER ERFINDUNG

Ein erfindungsgemäßes Verfahren zur Ermittlung einer sich ändernden räumlichen Verteilung von Partikeln zu mehreren, in zeitlichen Abständen aufeinander folgenden Zeitpunkten weist für jeden der Zeitpunkte die folgenden Schritte auf: (i) Aufnehmen von realen zweidimensionalen Bildern der Partikel mit unterschiedlichen wirksamen Abbildungsfunktionen zu dem jeweiligen Zeitpunkt; (ii) Vorgeben einer geschätzten räumlichen Verteilung der Partikel; (iii) Berechnen von virtuellen zweidimensionalen Bildern der geschätzten räumlichen Verteilung mit den unterschiedlichen Abbildungsfunktionen; (iv) Erfassen von Differenzen zwischen den virtuellen zweidimensionalen Bildern und den realen zweidimensionalen Bildern mit denselben Abbildungsfunktionen; und (v) Verändern der geschätzten räumlichen Verteilung der Partikel zur Reduzierung der Differenzen, um ein an die tatsächliche räumliche Verteilung der Partikel zu dem Zeitpunkt angenäherte räumliche Verteilung zu erhalten. Dabei wird die geschätzte räumliche Verteilung der Partikel für mindestens einen Zeitpunkt vorgegeben, indem die Positionen der einzelnen Partikel in einer für einen anderen Zeitpunkt erhaltenen angenäherten räumlichen Verteilung abhängig davon verschoben werden, wie sich ihre Positionen zwischen für mindestens zwei andere Zeitpunkte angenäherten räumlichen Verteilungen verschoben haben.

Zu dieser Merkmalskombination des erfindungsgemäßen Verfahrens sind folgende Hinweise angezeigt. Dass bei dem erfindungsgemäßen Verfahren die Schritte (i) bis (v) für jeden von mehreren in zeitlichen Abständen aufeinanderfolgenden Zeitpunkten durchgeführt werden, schließt nicht aus, dass zu weiteren, insbesondere früheren Zeitpunkten, zu denen noch keine angenäherten räumlichen Verteilungen für noch frühere Zeitpunkte zur Verfügung stehen, die geschätzte räumliche Verteilung der Partikel auch auf andere Weise, wie beispielsweise auf Basis einer Auswertung der realen Bilder mittels Triangulation, vorgegeben wird.

Die unterschiedlichen wirksamen Abbildungsfunktionen, mit denen die realen zweidimensionalen Bilder der Partikel zu jedem Zeitpunkt aufgenommen werden, bleiben über die Zeitpunkte hinweg gleich, oder auftretende Änderungen der Abbildungsfunktionen müssen kompensiert werden. Die unterschiedlichen Abbildungsfunktionen schließen insbesondere unterschiedliche Abbildungsrichtungen ein. Mindestens kommen zwei unterschiedliche Abbildungsfunktionen mit unterschiedlichen Abbildungsrichtungen zur Anwendung. Die Anzahl der zur Aufnahme der Bilder der Partikel eingesetzten Kameras kann aber auch deutlich größer als zwei sein.

Das Erfassen von Differenzen zwischen den virtuellen und realen zweidimensionalen Bildern mit denselben Abbildungsfunktionen sowie das Verändern der geschätzten räumlichen Verteilung der Partikel zur Reduzierung der Differenzen kann sich insbesondere auf die Position der Partikel in den zweidimensionalen Bildern und die Raumlagen der Partikel in der räumlichen Verteilung beziehen. Grundsätzlich können aber auch noch andere Parameter Berücksichtigung finden, wie sie in der DE 10 2009 009 551 B4 beschrieben sind.

Die Schritte (iii) bis (v) können bei dem erfindungsgemäßen Verfahren auch zwei- oder mehrfach iterativ wiederholt werden, um die angenäherte räumliche Verteilung schrittweise an die tatsächliche räumliche Verteilung anzupassen, bis beispielsweise ein maximaler Fehler bezüglich der Position der einzelnen Partikel nicht mehr überschritten wird. Auch insoweit wird bezüglich jeglicher Einzelheiten auf die DE 10 2009 009 551 B4 verwiesen.

Bei den für den einen und die mindestens zwei anderen Zeitpunkte angenäherten räumlichen Verteilungen kann es sich um für frühere oder spätere Zeitpunkte angenäherte räumliche Verteilungen handeln. Dies gilt auch, wenn in einigen folgenden Aussagen nur von früheren Zeitpunkten die Rede ist. Diese Aussagen sind so zu verstehen, dass sie auch für entsprechend auf den mindestens einen Zeitpunkt folgende spätere Zeitpunkte gelten. Häufig werden die für den einen und die mindestens zwei anderen Zeitpunkte angenäherten räumlichen Verteilungen, die bei der Vorgabe der geschätzten räumlichen Verteilung für den mindestens einen Zeitpunkt berücksichtigt werden aber insgesamt für frühere oder spätere Zeitpunkte angenähert sein.

Bei dem erfindungsgemäßen Verfahren wird zur Vorgabe der geschätzten räumlichen Verteilung der Partikel zum einen auf die Positionen der einzelnen Partikel in einer für einen früheren Zeitpunkt erhaltenen angenäherten räumlichen Verteilung und zum anderen auf Verschiebungen der Positionen der einzelnen Partikel zwischen für mindestens zwei frühere Zeitpunkte angenäherten räumlichen Verteilungen zurückgegriffen. Die Vorgabe der geschätzten räumlichen Verteilung der Partikel beruht damit auf der Annahme, dass die Partikel ihre bisherigen Trajektorien zumindest im Wesentlichen fortsetzen. Wenn sie ihre bisherigen Trajektorien sogar genau fortsetzen und diese Trajektorien mit den zu früheren Zeitpunkten bestimmten räumlichen Verteilungen vollständig erfasst wurden, treten gar keine Differenzen zwischen den berechneten virtuellen zweidimensionalen Bildern für die vorgegebene geschätzte räumliche Verteilung und den für jeweiligen Zeitpunkt aufgenommen realen zweidimensionalen Bildern auf. Anders gesagt gibt es Differenzen nur dann, wenn sich die Trajektorien der Partikel nicht genauso wie bisher fortsetzen, und jede notwendige Veränderung der geschätzten räumlichen Verteilung der Partikel zur Beseitigung der Differenzen zwischen den virtuellen und realen zweidimensionalen Bildern muss nur diese Änderung der Trajektorien abbilden. Entsprechend ist bei dem erfindungsgemäßen Verfahren die geschätzte räumliche Verteilung der tatsächlichen räumlichen Verteilung regelmäßig sehr nahe, und es sind nur wenige Iterationsschritte notwendig, um doch vorhandene Unterschiede auszugleichen. Dadurch erfordert das erfindungsgemäße Verfahren wenig Rechenaufwand und wird entsprechend sehr schnell.

Dabei ist auch zu berücksichtigen, dass es sich bei dem erfindungsgemäßen Verfahren typischer Weise um ein solches der PTV handelt, bei dem sowieso die Verschiebungen der Positionen der Partikel zwischen den zu den einzelnen Zeitpunkten bestimmten räumlichen Verteilungen erfasst werden, weil diese die bei der PTV interessierenden Informationen sind. Damit stehen aber bereits alle für die Vorgabe der geschätzten räumlichen Verteilung der Partikel für den nächsten Zeitpunkt benötigten Informationen zur Verfügung. Insbesondere werden dreidimensionale Rekonstruktionen der räumlichen Verteilung aus den zweidimensionalen realen Bildern nur im Vorlauf des erfindungsgemäßen Verfahrens benötigt, bis die erste abgeschätzte räumliche Verteilung auf der Basis von früher bestimmten räumlichen Verteilungen vorgegeben werden kann.

### WEITERER STAND DER TECHNIK

Aus J. Willneff (2003): A Spatio-Temporal Matching Algorithm for 3D Particle Tracking Velocimetry, Zürich, Diss. ETH No. 15276, ist es zum Wiederfinden derselben Partikel, die bereits zu einem früheren Zeitpunkt aufgenommen wurden, in zu einem späteren Zeitpunkt aufgenommenen Bildern bekannt, die Positionen der Partikel zu dem späteren Zeitpunkt ausgehend von ihren früheren Positionen zu extrapolieren und hieraus unter Berücksichtigung der Abbildungsfunktionen deren erwartete Positionen in den realen Bildern zu berechnen. Für die Ermittlung der räumlichen Verteilungen der Partikel selbst wird von den extrapolierten Positionen kein Gebrauch gemacht, sondern es wird auf konventionelle dreidimensionale Rekonstruktionen der Positionen der Partikel aus den zweidimensionalen realen Bildern zurückgegriffen.

### WEITERE BESCHREIBUNG DER ERFINDUNG

Das erfindungsgemäße Verfahren ist das erste PTV-Verfahren, bei dem die räumliche Verteilung der Partikel zu mindestens einem Zeitpunkt derart auf den für frühere Zeitpunkte bestimmten räumlichen Verteilungen der Partikel basierend bestimmt, dass nicht einmal mehr eine grobe Bestimmung der Raumlagen der Teilchen zu dem mindestens einen Zeitpunkt durch Triangulation oder eine andere dreidimensionale Rekonstruktionen der räumlichen Verteilung aus den zu dem mindestens einen Zeitpunkt aufgenommenen realen Bildern durchzuführen ist. Dies ist Grundlage dafür, dass die räumliche Verteilung der Partikel zu dem mindestens einem Zeitpunkt mit hoher Geschwindigkeit bestimmt wird. Dennoch wird mit der vorliegenden Erfindung auch eine hohe Genauigkeit bei der Bestimmung der Raumlagen der einzelnen Partikel erreicht.

Bei dem erfindungsgemäßen Verfahren kann die für einen früheren Zeitpunkt erhaltene angenäherte räumliche Verteilung, von der für die Vorgabe der geschätzten räumlichen Verteilung der Partikel ausgegangen wird, die räumliche Verteilung sein, die für den letzten vor dem mindestens einen Zeitpunkt liegenden früheren Zeitpunkt erhalten wurde. Diese räumliche Verteilung ist tendenziell diejenige, die der räumlichen Verteilung zu dem nächsten Zeitpunkt von allen bisherigen räumlichen Verteilungen am nächsten kommt. Sie kann daher unter Umständen auch selbst als geschätzte räumliche Verteilung für den nächsten Zeitpunkt verwendet werden, wenn beispielsweise nur sie und nicht auch noch weitere räumliche Verteilungen, aus denen Verschiebungen der Positionen der einzelnen Partikel ermittelbar sind, zur Verfügung stehen.

Hinsichtlich dieser Verschiebungen der Positionen der Partikel zwischen für mindestens zwei frühere Zeitpunkte angenäherten räumlichen Verteilungen ist es bevorzugt, wenn diese mindestens die Verteilungen einschließen, die für den letzten und den vorletzten vor dem mindestens einen Zeitpunkt liegenden frühren Zeitpunkt erhalten wurden. Aus diesen beiden räumlichen Verteilungen sind aktuelle Informationen über die Geschwindigkeiten der Partikel in dem Zeitraum zwischen dem letzten und dem vorletzten Zeitpunkt vor dem mindestens einen Zeitpunkt ableitbar. Diese Geschwindigkeiten können sich zwischen dem letzten und dem mindestens einen Zeitpunkt nur begrenzt geändert haben und sind damit neben der letzten räumlichen Verteilung der Partikel die wichtigste Information für die Vorgabe der geschätzten räumlichen Verteilung der Partikel für den mindestens einen Zeitpunkt, für den das erfindungsgemäße Verfahren durchgeführt wird und der hier der Einfachheit halber auch als der "aktuelle" Zeitpunkt bezeichnet wird.

Die bisherigen Trajektorien der Partikel können bei dem erfindungsgemäßen Verfahren auch genauer, d. h. unter Berücksichtigung von mehr angenäherten räumlichen Verteilungen als zu dem letzten und vorletzten Zeitpunkt vor dem aktuellen Zeitpunkt bestimmt werden. So kann die geschätzte räumliche Verteilung der Partikel für mindestens einen Zeitpunkt vorgegeben werden, indem aus für mindestens drei frühere Zeitpunkte angenäherten räumlichen Verteilungen Trajektorien der einzelnen Partikel bestimmt und bis zu dem aktuellen Zeitpunkt extrapoliert werden.

Da die Partikel ihre bisherigen Trajektorien stetig fortsetzen, wenn sie Strömungen in einem Fluid folgen, können Partikel mit diskontinuierlichen Trajektorien identifiziert und aus den angenäherten räumlichen Verteilungen eliminiert werden.

Weiterhin kann an die Trajektorien der Partikel die Anforderung gestellt werden, dass sie von Navier-Stokes Lösungen für eine Strömung eines mit den Partikeln beimpften Fluids um nicht mehr als ein vorgegebenes Maß abweichen. So kann eine Navier-Stokes Regularisierung der Trajektorien vorgenommen werden.

Wenn ein Partikel, dessen Trajektorie über mehrere frühere Zeitpunkte verfolgt wurde, in den zu einem Zeitpunkt aufgenommen realen Bildern fehlt, aber in den zu späteren Zeitpunkten aufgenommenen realen Bildern auf einer stetigen Fortsetzung derselben Trajektorie wieder auftaucht, kann seine Position in der für den einen Zeitpunkt bestimmten räumlichen Verteilung auf der fortgesetzten Trajektorie ergänzt werden.

Grundsätzlich können beim Erfassen von Differenzen zwischen den virtuellen zweidimensionalen Bildern und den realen zweidimensionalen Bildern mit denselben Abbildungsfunktionen erfasste, in den realen Bildern fehlende Partikel aus der angenäherten räumlichen Verteilung eliminiert werden. Wenn es sich z. B. bei den in den realen Bildern fehlenden Partikeln um auch in der abgeschätzten räumlichen Verteilung randständige Partikel handelt, ist zu unterstellen, dass diese das jeweilige Messvolumen verlassen haben.

Umgekehrt können beim Erfassen von Differenzen zwischen den virtuellen zweidimensionalen Bildern und den realen zweidimensionalen Bildern mit denselben Abbildungsfunktionen erfasste zusätzliche Partikel in den realen Bildern in die angenäherte räumliche Verteilung aufgenommen werden, insbesondere wenn die zusätzlichen Partikel am Rand des Messvolumens liegen. In diesem Fall ist zu unterstellen, dass diese Partikel neu in das Messvolumen gelangt sind. Die räumlichen Positionen dieser neuen Partikel können durch dreidimensional Rekonstruktion aus den realen zweidimensionalen Bildern bestimmt werden, wobei sich der dafür zu betreibende Aufwand angesichts der kleinen Zahl der neuen Partikel in Grenzen hält.

In eine speziellen Ausführungsform des erfindungsgemäßen Verfahrens werden die räumlichen Verteilungen der Partikel für Zeitpunkte zwischen einem ersten Zeitpunkt und einem viel späteren zweiten Zeitpunkt einmal ausgehend von dem ersten Zeitpunkt für nachfolgende Zeitpunkte und einmal ausgehend von dem zweiten Zeitpunkt für vorhergehende Zeitpunkte bestimmt. Im Idealfall ergeben sich dabei jeweils zwei identische Verteilungen der Partikel für jeden der Zeitpunkte. Zum Beispiel bei hoher Dichte der Partikel ermöglicht diese Vorgehensweise jedoch manchmal, Partikel beim Vorgehen in der einen zeitlichen Richtung aufzulösen, die beim Vorgehen in der anderen zeitlichen Richtung nicht aufgelöst werden. Wenn dann Partikel, die nur in einer der beiden für einen der Zeitpunkte zwischen dem ersten Zeitpunkt und dem zweiten Zeitpunkt bestimmten räumlichen Verteilungen enthalten sind, in der jeweils anderen räumlichen Verteilung für diesen Zeitpunkt ergänzt werden, enthält die andere Verteilung alle Positionen aller aufgelösten Partikel.

Wenn bei dem erfindungsgemäßen Verfahren Partikel aus der ermittelten räumlichen Verteilung verschwinden und anschließend neue Partikel in der räumlichen Verteilung auftauchen, kann es sich tatsächlich um dieselben Partikel handeln, deren Trajektorien nur vorübergehend nicht verfolgt werden konnten. Dies gilt insbesondere dann, wenn die Partikel nicht am Rand des beobachteten Volumens, sondern beispielsweise in einem räumlichen Bereich verschwinden und wieder auftauchen, in dem die Sichtlinien der Partikel in mehreren Bildern mit unterschiedlichen Abbildungsfunktionen nahe beieinander liegen, so dass die Partikel in den Bildern einander ganz oder teilweise überlappen. Um zu überprüfen, ob es sich tatsächlich um dieselben Partikel handelt, können die vermutlichen Trajektorien der verschwindenden Partikel, z. B. durch Anfitten eines Splines, über den Zeitpunkt ihres Verschwindens hinaus extrapoliert werden. Dann kann geprüft werden, ob ein neu in der Verteilung aufgetauchter Partikel auf oder in der Nähe einer dieser extrapolierten Trajektorien liegt und ob seine Trajektorie parallel oder zumindest annähernd parallel zu der extrapolierten Trajektorie verläuft. Dieses Verfahren kann auch in umgekehrter zeitlicher Richtung für jeden neu aufgetauchten Partikel in die Vergangenheit hinein durchgeführt werden. Wenn die extrapolierten und realen Trajektorien um weniger als vorgegebene Grenzwerte voneinander abweichen, kann darauf geschlossen werden, dass das neu aufgetauchte Teilchen tatsächlich das zuvor aus der Verteilung verschwundene Teilchen ist. Mit Hilfe der extrapolierten Trajektorien kann dann die Trajektorie eines solchen Partikels für die Zeitpunkte, in denen er nicht in der Verteilung enthalten war, vervollständigt werden.

Bei dem erfindungsgemäßen Verfahren kann das Verändern der geschätzten räumlichen Verteilung der Partikel zur Reduzierung der Differenzen zwischen den realen und virtuellen zweidimensionalen Bildern das koordinierte Verändern von Raumlagen insbesondere von solchen Partikeln umfassen, die in der geschätzten räumlichen Verteilung dicht benachbart sind. In der geschätzten räumlichen Verteilung dicht beieinander liegende Partikel liegen auch in den realen und virtuellen zweidimensionalen Bildern dicht beieinander. Beim unkoordinierte Verändern der Raumlagen dieser Partikel in der abgeschätzten räumlichen Verteilung, um Differenzen zwischen den realen und virtuellen Bildern zu reduzieren, besteht daher die Gefahr, das die Raumlage eines Partikels so verändert wird, dass sie mit den realen Bildern eines tatsächlich anderen Partikels konsistent wird. Damit kann auch der andere Partikel nicht mehr richtig zugeordnet werden. Jede solche Vertauschung bedeutet einen Fehler bei der Erfassung der tatsächlichen Trajektorien der Partikel. Beim koordinierten Verändern der Raumlagen aller in dem dichten Bereich angeordneten Partikel kann die wahrscheinlichste richtige Veränderung der Raumlage für alle Partikel leichter erkannt werden. Dabei können verschiedene Randbedingungen wie eine minimale mittlere Beschleunigung der Partikel, eine minimale mittlere quadratische Abweichung von einer Navier-Stokes Lösung für den Bereich oder dgl. gesetzt werden.

Grundsätzlich kann das Verändern der geschätzten räumlichen Verteilung der Partikel zur Reduzierung der Differenzen zwischen den realen und virtuellen zweidimensionalen Bildern das koordinierte Verändern der Raumlagen von allen Partikeln umfassen, die in der geschätzten räumlichen Verteilung der Partikel enthalten sind. Dadurch wird jedoch der für das erfindungsgemäße Verfahren zu betreibende Aufwand recht groß. Es ist daher sinnvoll, das koordinierte Verändern der geschätzten räumlichen Verteilung der Partikel nur für solche Partikel durchzuführen, deren Abbilder aufgrund übereinstimmender oder sehr nahe beieinander liegender Sichtlinien in einem, mehreren, fast allen oder tatsächlich allen der zweidimensionalen Bilder der Partikel ganz oder zumindest teilweise überlappen. Die Gefahr eines wesentlichen Überlappens der Abbilder der Partikel in den Bildern mit den verschiedenen Abbildungsfunktionen besteht insbesondere bei Verwendung nur weniger Kameras zum Aufnehmen der realen Bilder der Partikel.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Die Erfindung wird im Folgenden anhand von Ausführungsbeispielen unter Bezugnahme auf die beigefügten Zeichnungen näher erläutert und beschrieben.
- **Fig. 1**: illustriert das erfindungsgemäße Verfahren anhand eines ersten Ausführungsbeispiels.
- **Fig. 2**: illustriert das erfindungsgemäße Verfahren anhand eines zweiten Ausführungsbeispiels.
- **Fig. 3**: illustriert eine diskontinuierliche Trajektorie eines Partikels, die bei dem erfindungsgemäßen Verfahren zur Eliminierung des Partikels führt.
- **Fig. 4**: ist ein Flussdiagram zur Durchführung einer Ausführungsform des erfindungsgemäßen Verfahrens; und
- **Fig. 5**: ist ein Flussdiagram zur Durchführung einer weiteren Ausführungsform des erfindungsgemäßen Verfahrens.

### FIGURENBESCHREIBUNG

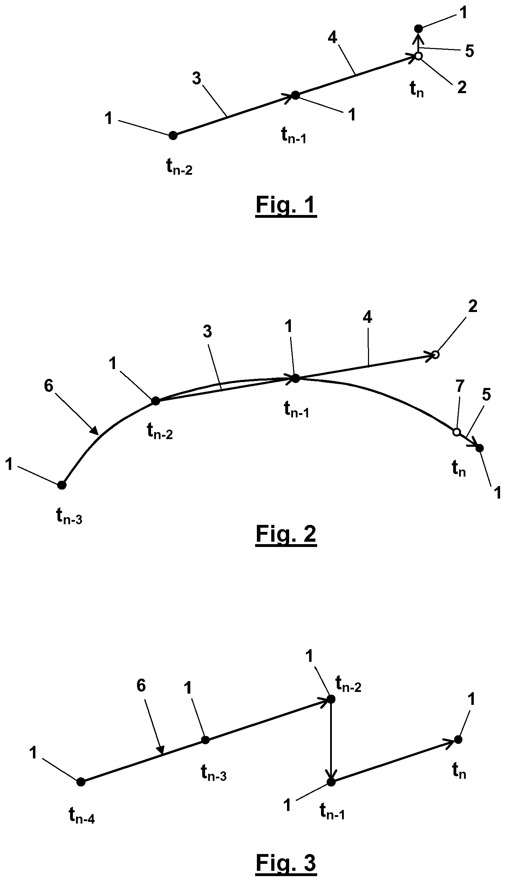

**Fig. 1** zeigt mit einem gefüllten schwarzen Punkt ein Partikel 1 zu drei Zeitpunkten tₙ₋₂, tₙ₋₁ und tₙ. Gezeigt sind die Positionen des Partikels 1 in zu den Zeitpunkten tₙ₋₂, tₙ₋₁ und tₙ mit derselben Abbildungsfunktion aufgenommenen realen Bildern. Aus mehreren, zu jeweils einem Zeitpunkt tₙ₋₂, tₙ₋₁ bzw. tₙ aufgenommenen Bildern mit unterschiedlichen Abbildungsfunktionen ist die Position des Partikels 1 im Raum und bei mehreren Partikeln deren räumliche Verteilung bestimmbar. Bei einem erfindungsgemäßen Verfahren erfolgt diese Bestimmung anhand des grundsätzlich aus der DE 10 2009 009 551 B4 bekannten Vorgehens, indem ausgehend von einer abgeschätzten räumlichen Verteilung virtuelle Bilder berechnet werden, die den Abbildungsfunktionen entsprechen, mit denen die realen Bilder der Partikel aufgenommen werden. Dann werden die virtuellen Bilder mit den realen Bildern mit denselben Abbildungsfunktionen verglichen, um Differenzen bei den Positionen der Partikel festzustellen. Anschließend wird die abgeschätzte räumliche Verteilung so verändert, dass diese Differenzen reduziert werden. Diese Schritte können iterativ durchgeführt werden, bis die in der nächsten Iterationsstufe festgestellten Differenzen eine vorgegebene Obergrenze nicht mehr überschreiten. Bei dem erfindungsgemäßen Verfahren wird die abgeschätzte Verteilung der Partikel basierend auf den für frühere Zeitpunkte ermittelten räumlichen Verteilungen der Partikel vorgegeben. Dies wirkt sich bezüglich des in Fig. 1 dargestellten Partikels 1 wie folgt aus. Für den Zeitpunkt tₙ wird eine abgeschätzte Position 2 des Partikels 1 auf Basis seiner letzten Position zum Zeitpunkt tₙ₋₁ und seiner Verschiebung 3 zwischen dem vorletzten Zeitpunkt tₙ₋₂ und dem letzten Zeitpunkt tₙ₋₁ vorgegeben. Bei gleichen zeitlichen Abständen der Zeitpunkte tₙ₋₂ und tₙ₋₁ einerseits sowie tₙ₋₁ und tₙ andererseits wird also davon ausgegangen, dass auch die Verschiebung 4 der Position der Partikel 1 zwischen den Zeitpunkten tₙ₋₁ und tₙ gleich der Verschiebung 3 zwischen den Zeitpunkten tₙ₋₂ und tₙ₋₁ ist. Die tatsächliche Position des Partikels 1 zum Zeitpunkt tₙ kann von dieser abgeschätzten Position 2 abweichen. Eine auftretende Differenz 5 wird aber nur klein sein. Entsprechend wird die Annäherung einer entsprechend abgeschätzten räumlichen Verteilung mehrerer Partikel 1 an die tatsächliche Verteilung der Partikel 1 in wenigen Iterationsschritten erfolgreich sein.

**Fig. 2** zeigt eine Trajektorie 6 eines Partikels 1 in einem Zeitraum von tₙ₋₃ bis tₙ, wobei der Partikel 1 zu den Zeitpunkten tₙ₋₃, tₙ₋₂, tₙ₋₁ und tₙ wiedergegeben ist. Dabei ist Fig. 2 wieder ein zweidimensionales Bild des Partikels 1 mit einer festen Abbildungsfunktion. Die Trajektorie 6 ist gekrümmt. Zudem ändert sich die Geschwindigkeit des Partikels 1 längs der Trajektorie 6, d. h. die zwischen den in gleichen zeitlichen Abständen angeordneten Zeitpunkte tₙ₋₃, tₙ₋₂, tₙ₋₁ und tₙ von dem Partikel 1 zurückgelegten Wege sind unterschiedlich lang. Daher ist es zur Ermittlung einer abgeschätzten Position 7 des Partikels 1 zum Zeitpunkt tₙ sinnvoll, so viele frühere Zeitpunkte und die zu diesen Zeitpunkten vorliegenden Verteilungen der Partikel zu berücksichtigen, das die Trajektorie 6 hieraus mit möglichst vielen ihrer Eigenschaften erfasst und auf den Zeitpunkt tₙ extrapoliert werden kann. Dies führt zu einer abgeschätzten Position 7 mit nur kleiner Differenz 5 zu der realen Position des Partikels 1 zum Zeitpunkt tₙ. Das Extrapolieren der Position des Partikels 1 zu dem Zeitpunkt tₙ nur auf Basis seiner Position zum Zeitpunkt tₙ₋₁ und seiner Verschiebung 3 zwischen den Zeitpunkten tₙ₋₂ und tₙ₋₁, d. h. die Annahme einer Verschiebung 4 mit gleicher Richtung und Länge wie die Verschiebung 3 analog zu Fig. 1, würde zu einer abgeschätzten Position 2 für den Zeitpunkt tₙ führen, die weitab der tatsächlichen Position zum Zeitpunkt tₙ liegt, so dass ein Anpassen der abgeschätzten Position 7 an die tatsächliche Position des Partikels 1 sehr viel aufwändiger wäre.

**Fig. 3** zeigt eine Trajektorie 6, die aus der Ermittlung der Positionen des Partikels 1 zu fünf Zeitpunkten tₙ₋₄ bis tₙ resultieren möge. Diese Trajektorie weist zwischen den Zeitpunkten tₙ₋₂ und tₙ₋₁ eine Diskontinuität auf, die einem seitlichen Sprung des Partikels zu seiner bisherigen und zukünftigen Bewegungsrichtung entspricht. Eine solche Trajektorie kann ein reales Partikel aufgrund seiner Trägheit und auch der Trägheit des ihn mitführenden Fluids nicht zurücklegen. Ein solches Partikel 1 wird daher bei dem erfindungsgemäßen Verfahren eliminiert.

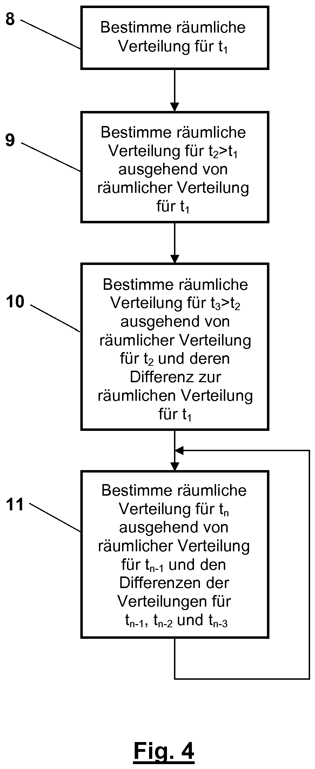

Das in **Fig. 4** durch ein Flussdiagramm illustrierte erfindungsgemäße Verfahren beginnt mit der Bestimmung einer räumlichen Verteilung von Partikeln für einen Zeitpunkt t₁ auf irgendeine grundsätzlich bekannte Weise. An diesen Schritt 8 schließt sich ein Schritt 9 an, in dem die räumliche Verteilung der Partikel für einen Zeitpunkt t₂ nach t₁ auf dieselbe Weise bestimmt wird. Bei sehr kleinem zeitlichen Abstand zwischen t₁ und t₂ und entsprechend nur kleiner möglicher Veränderung der Positionen der einzelnen Partikel kann die räumliche Verteilung der Partikel für einen Zeitpunkt t₂ auch unter iterativer Anpassung der für den Zeitpunkt t₁ bestimmten räumlichen Verteilung als abgeschätzte räumliche Verteilung an die realen Bilder der Verteilung bestimmt werden. Dabei kann die Vorgehensweise bei der iterativen Anpassung dem entsprechen, was bereits aus der DE 10 2009 009 551 B4 bekannt ist.

Für einen folgenden Zeitpunkt t₃ wird in einem Schritt 10 die räumliche Verteilung der Partikel ebenfalls ausgehend von einer abgeschätzten räumlichen Verteilung wie grundsätzlich aus der DE 10 2009 009 551 B4 bekannt bestimmt. Als abgeschätzte räumliche Verteilung wird aber nicht nur die letzte räumliche Verteilung zum Zeitpunkt t₂ verwendet, sondern sie berücksichtigt neben der Verteilung zum Zeitpunkt t₂ auch die Verschiebung der Positionen der einzelnen Partikel zwischen den räumlichen Verteilungen zu den Zeitpunkten t₁ und t₂, indem sie gleiche Verschiebungen auch zwischen t₂ und t₃ annimmt. Dieser Schritt 10 entspricht damit dem Vorgehen, das anhand von Fig. 1 für ein einzelnes Partikel illustriert wurde. In einem nachfolgenden Schritt 11 wird dann für spätere Zeitpunkte tₙ die räumliche Verteilung jeweils ausgehend von der räumlichen Verteilung für den Zeitpunkt tₙ₋₁ und und unter Berücksichtigung der Differenzen der räumlichen Verteilung für die Zeitpunkte tₙ₋₁, tₙ₋₂, tₙ₋₃ und eventuell noch weiteren frühren Zeitpunkten bestimmt. Die Weise, auf der die abgeschätzte räumliche Verteilung unter Berücksichtigung dieser früheren räumlichen Verteilungen für den Zeitpunkt tₙ berechnet wird, entspricht der anhand von Fig. 2 für ein Partikel 1 illustrierten Vorgehensweise. Der Schritt 11 wird dann für alle weiteren Zeitpunkte wiederholt, zu denen reale Bilder der räumlichen Verteilung der Partikel aufgenommen werden.

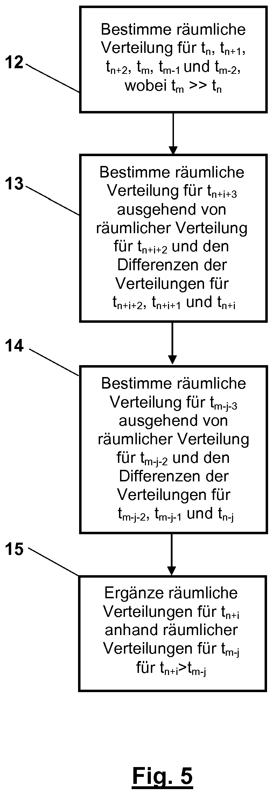

Das in **Fig. 5** durch ein Flussdiagramm illustrierte erfindungsgemäße Verfahren beginnt in einem Schritt 12 mit einer Bestimmung von räumlichen Verteilungen der Partikel für drei aufeinanderfolgende Zeitpunkte tₙ, tₙ₊₁, tₙ₊₂ und tₘ, tₘ₋₁ und tₘ₋₂, die einmal nach einem ersten Zeitpunkt tₙ liegen und einmal vor einem viel späteren Zeitpunkt tₘ. Dann werden in den nachfolgenden Schritten 13 und 14 für die zwischen den Zeitpunkten tₙ und tₘ verbleibenden Zeitpunkte tₙ₊ᵢ₊₃ bzw. tₘ₋ⱼ₋₃ die räumlichen Verteilungen ausgehend von den räumlichen Verteilungen für frühere Zeitpunkte tₙ₊ᵢ₊₂, tₙ₊ᵢ₊₁ und tₙ₊ᵢ bzw. spätere Zeitpunkte tₘ₋ⱼ₋₂ und tₘ₋ⱼ₋₁ und tₘ₋ⱼ bestimmt. Dabei wird für jeden dieser Zeitpunkte die räumliche Verteilung einmal unter Fortschreiten in Zeitrichtung und einmal unter Fortschreiten entgegen der Zeitrichtung bestimmt. Wenn dann Partikel in den räumlichen Verteilungen, die beim Fortschreiten in der einen Richtung erfasst werden, in den Verteilungen ergänzt werden, die beim Fortschreiten in der anderen Richtung für gleiche Zeiträume angenähert wurden, ergeben sich vervollständigte räumliche Verteilungen für diese Zeitpunkte. Darüber hinaus können Trajektorien von Partikeln, die beim Vorgehen in der einen zeitlichen Richtung auffällig sind, anhand der beim Vorgehen in der anderen zeitlichen Richtung bestimmten Trajektorien darauf überprüft werden, ob es sich tatsächlich um durchgängige Trajektorien derselben Partikel handelt oder nicht beispielsweise um sich flach kreuzende Trajektorien verschiedener Partikel.

### BEZUGSZEICHENLISTE

- 1: Partikel
- 2: Position
- 3: Verschiebung
- 4: Verschiebung
- 5: Differenz
- 6: Trajektorie
- 7: Position
- 8: Schritt
- 9: Schritt
- 10: Schritt
- 11: Schritt
- 12: Schritt
- 13: Schritt
- 14: Schritt
- 15: Schritt
- tₙ: Zeitpunkt
- tₘ: Zeitpunkt
- tₙ₊ᵢ: Zeitpunkt
- tₘ₋ⱼ: Zeitpunkt
- tₙ₋₄: Zeitpunkt
- tₙ₋₃: Zeitpunkt
- tₙ₋₂: Zeitpunkt
- tₙ₋₁: Zeitpunkt

## Patentansprüche

1. Verfahren zur Ermittlung einer sich ändernden räumlichen Verteilung von Partikeln (1) zu mehreren, in zeitlichen Abständen aufeinander folgenden Zeitpunkten (tₙ₋₄, tₙ₋₃, tₙ₋₂, tₙ₋₁, tₙ), das für jeden der Zeitpunkte (tₙ₋₄, tₙ₋₃, tₙ₋₂, tₙ₋₁, tₙ) die folgenden Schritte aufweist:
- Aufnehmen von realen zweidimensionalen Bildern der Partikel (1) mit unterschiedlichen wirksamen Abbildungsfunktionen zu dem jeweiligen Zeitpunkt (tₙ₋₄, tₙ₋₃, tₙ₋₂, tₙ₋₁, tₙ);
- Vorgeben einer geschätzten räumlichen Verteilung der Partikel (1);
- Berechnen von virtuellen zweidimensionalen Bildern der geschätzten räumlichen Verteilung mit den unterschiedlichen Abbildungsfunktionen;
- Erfassen von Differenzen (5) zwischen den virtuellen zweidimensionalen Bildern und den realen zweidimensionalen Bildern mit denselben Abbildungsfunktionen; und
- Verändern der geschätzten räumlichen Verteilung der Partikel (1) zur Reduzierung der Differenzen (5), um eine an die tatsächliche räumliche Verteilung der Partikel (1) zu dem Zeitpunkt angenäherte räumliche Verteilung zu erhalten;
**dadurch gekennzeichnet, dass** die geschätzte räumliche Verteilung der Partikel (1) für mindestens einen Zeitpunkt (tₙ) vorgegeben wird, indem die Positionen der einzelnen Partikel (1) in einer für einen anderen Zeitpunkt (tₙ₋₁) erhaltenen angenäherten räumlichen Verteilung abhängig davon verschoben werden, wie sich ihre Positionen zwischen für mindestens zwei andere Zeitpunkte (tₙ₋₃, tₙ₋₂, tₙ₋₁) angenäherten räumlichen Verteilungen verschoben haben.

2. Verfahren nach Anspruch 1, **dadurch gekennzeichnet, dass** die für den einen anderen Zeitpunkt (tₙ₋₁) erhaltene angenäherte räumliche Verteilung die räumliche Verteilung ist, die für den letzten vor oder den nächsten nach dem mindestens einen Zeitpunkt (tₙ) liegenden Zeitpunkt (tₙ₋₁) erhalten wurde.

3. Verfahren nach Anspruch 1 oder 2, **dadurch gekennzeichnet, dass** die für die mindestens zwei anderen Zeitpunkte (tₙ₋₂, tₙ₋₁) angenäherten räumlichen Verteilungen die räumlichen Verteilungen einschließen, die für den letzten und den vorletzten vor oder den nächsten und den übernächsten nach dem mindestens einen Zeitpunkt (tₙ) liegenden Zeitpunkt (tₙ₋₂, tₙ₋₁) erhalten wurden.

4. Verfahren nach einem der vorhergehenden Ansprüche, **dadurch gekennzeichnet, dass** die geschätzte räumliche Verteilung der Partikel (1) für mindestens einen Zeitpunkt (tₙ) vorgegeben wird, indem aus den für die mindestens zwei anderen Zeitpunkte (tₙ₋₂, tₙ₋₁) angenäherten räumlichen Verteilungen Trajektorien (6) der einzelnen Partikel (1) bestimmt und bis zu dem mindestens einen Zeitpunkt (tₙ) extrapoliert werden.

5. Verfahren nach Anspruch 4, **dadurch gekennzeichnet, dass** die Trajektorien (6) aus den für mehr als zwei andere Zeitpunkte (tₙ₋₃, tₙ₋₂, tₙ₋₁) angenäherten räumlichen Verteilungen bestimmt werden.

6. Verfahren nach Anspruch 5, **dadurch gekennzeichnet, dass** Partikel (1) mit diskontinuierlichen Trajektorien (6) identifiziert und aus den angenäherten räumlichen Verteilungen eliminiert werden.

7. Verfahren nach Anspruch 5 oder 6, **dadurch gekennzeichnet, dass** Partikel (1) mit Trajektorien (6), die von Navier-Stokes Lösungen für eine Strömung eines mit den Partikeln (1) beimpften Fluids um mehr als ein vorgegebenes Maß abweichen, identifiziert und aus den angenäherten räumlichen Verteilungen eliminiert werden.

8. Verfahren nach einem der Ansprüche 5 bis 7, **dadurch gekennzeichnet, dass** dann, wenn ein Partikel (1), dessen Trajektorie über mehrere frühere Zeitpunkte hinweg verfolgt wurde, in den zu einem Zeitpunkt aufgenommen realen Bildern fehlt, aber in den zu späteren Zeitpunkten aufgenommenen realen Bildern auf einer stetigen Fortsetzung derselben Trajektorie wieder auftaucht, eine Position des Partikels (1) in der für den einen Zeitpunkt bestimmten räumlichen Verteilung auf der fortgesetzten Trajektorie ergänzt wird.

9. Verfahren nach einem der vorhergehenden Ansprüche, **dadurch gekennzeichnet, dass** beim Erfassen von Differenzen (5) zwischen den virtuellen zweidimensionalen Bildern und den realen zweidimensionalen Bildern mit denselben Abbildungsfunktionen erfasste in den realen Bildern fehlende Partikel (1) aus der angenäherten räumlichen Verteilung eliminiert werden.

10. Verfahren nach einem der vorhergehenden Ansprüche, **dadurch gekennzeichnet, dass** beim Erfassen von Differenzen (5) zwischen den virtuellen zweidimensionalen Bildern und den realen zweidimensionalen Bildern mit denselben Abbildungsfunktionen erfasste zusätzliche Partikel (1) in den realen Bildern in die angenäherte räumliche Verteilung aufgenommen werden.

11. Verfahren nach einem der vorhergehenden Ansprüche, **dadurch gekennzeichnet, dass** die räumlichen Verteilungen der Partikel für Zeitpunkte zwischen einem ersten Zeitpunkt (tₙ₊₃) und einem viel späteren zweiten Zeitpunkt (tₘ₋₃) einmal ausgehend von dem ersten Zeitpunkt (tₙ₊₃) für nachfolgende Zeitpunkte (tₙ₊ᵢ₊₃) und einmal ausgehend von dem zweiten Zeitpunkt (tₘ₋₃) für vorhergehende Zeitpunkte (tₘ₋ⱼ₋₃) bestimmt werden.

12. Verfahren nach Anspruch 11, **dadurch gekennzeichnet, dass** Partikel (1), die nur in einer der beiden für einen der Zeitpunkte zwischen dem ersten Zeitpunkt (tₙ₊₃) und dem zweiten Zeitpunkt (tₘ₋₃) bestimmten räumlichen Verteilungen enthalten sind, in der anderen räumlichen Verteilung für diesen Zeitpunkt ergänzt werden.

13. Verfahren nach einem der vorhergehenden Ansprüche, **dadurch gekennzeichnet, dass** beim Verändern der geschätzten räumlichen Verteilung der Partikel (1) zur Reduzierung der Differenzen (5) Raumlagen von Partikeln (1), die in der geschätzten räumlichen Verteilung dicht benachbart sind, koordiniert verändert werden.

## Claims

1. Method of determining a changing spatial distribution of particles (1) at multiple points in time (tₙ₋₄, tₙ₋₃, tₙ₋₂, tₙ₋₁, tₙ) following to each other at intervals, the method comprising the following steps for each of the points in time (tₙ₋₄, tₙ₋₃, tₙ₋₂, tₙ₋₁, tₙ);
- recording real two-dimensional images of the particles (1) with different effective mapping functions at the respective point in time (tₙ₋₄, tₙ₋₃, tₙ₋₂, tₙ₋₁, tₙ);
- providing an estimated spatial distribution of the particles (1);
- calculating virtual two-dimensional images of the estimated spatial distribution using the different mapping functions;
- determining differences (5) between the virtual two-dimensional images and the real two-dimensional images of the same mapping functions; and
- varying the estimated spatial distribution of the particles (1) for reducing the differences (5) to obtain a spatial distribution approximated to the actual spatial distribution of the particles (1) at the respective point in time;
**characterised in that** the estimated spatial distribution of the particles (1) is provided for at least one point in time (tₙ) **in that** the locations of the individual particles (1) in an approximated spatial distribution obtained for another point in time (tₙ₋₁) are shifted dependently on how the locations of the individual particles have changed between at least two approximated spatial distributions obtained for at least two other points in time (tₙ₋₃, tₙ₋₂, tₙ₋₁).

2. Method of claim 1, **characterised in that** the approximated spatial distribution obtained for the one other point in time (tₙ₋₁) is that spatial distribution which has been obtained for the last point in time (tₙ₋₁) prior to or for the next point in time after the at least one point in time (tₙ).

3. Method of claim 1 or 2, **characterised in that** the approximated spatial distributions obtained for the at least two other points in time (tₙ₋₂, tₙ₋₁) include spatial distributions which have been obtained for the last and the next to last points in time (tₙ₋₂, tₙ₋₁) prior to or the next and the next to next points in time after the at least one point in time (tₙ).

4. Method of any of the preceding claims, **characterised in that** the estimated spatial distribution of the particles (1) is provided for at least one point in time (tₙ) **in that** trajectories (6) of the individual particles (1) are determined from the spatial distributions approximated for the at least two other points in time (tₙ₋₂, tₙ₋₁), and are extrapolated for the at least one point in time (tₙ).

5. Method of claim 4, **characterised in that** the trajectories (6) are determined from the spatial distributions approximated for more than two other points in time (tₙ₋₃, tₙ₋₂, tₙ₋₁).

6. Method of claim 5, **characterised in that** particles (1) with discontinuous trajectories (6) are identified and eliminated from the approximated spatial distributions.

7. Method of claim 5 or 6, **characterised in that** particles (1) with trajectories (6) which deviate from Navier-Stokes solutions for a flow of a fluid seeded with the particles (1) by more than a preset limit value are identified and eliminated from the approximated spatial distributions.

8. Method of any of the claims 5 to 7, **characterised in that**, if a particle (1) whose trajectory has been followed over several prior points in time is missing in the real images recorded for one point in time but reappears in the real images recorded for later points in time on a steady continuation of the same trajectory, a location of the particle (1) on the continued trajectory is added in the spatial distribution determined for the one point in time.

9. Method of any of the preceding claims, **characterised in that** particles (1) determined in determining differences (5) between the virtual two-dimensional images and the real two-dimensional images of the same mapping functions but missing in the real images are eliminated from the approximated spatial distribution.

10. Method of any of the preceding claims, **characterised in that** particles (1) additionally determined in the real images in determining differences (5) between the virtual two-dimensional images and the real two-dimensional images of the same mapping functions are added to the approximated spatial distribution.

11. Method of any of the preceding claims, **characterised in that** the spatial distribution of the particles for points in time between a first point in time (tₙ₊₃) and a much later second point in time (tₘ₋₃) are once determined starting from the first point in time (tₙ₊₃) for following points in time (tₙ₊ᵢ₊₃) and once starting from the second point in time (tₘ₋₃) for preceding points in time (tₘ₋ⱼ₋₃).

12. Method of claim 11, **characterised in that** particles (1) which are only included in one of the two spatial distributions determined for any of the points in time between the first point in time (tₙ₊₃) and the second point In time (tₘ₋₃) are added to the other spatial distribution for this point in time.

13. Method of any of the preceding claims, **characterised in that**, in varying the estimated spatial distribution of the particles (1) for reducing the differences (5), spatial locations of particles (1) which are closely neighbouring in the estimated spatial distributions are varied in a coordinated way.

## Revendications

1. Procédé de détermination d'une distribution spatiale variable de particules (1) en une pluralité d'instants (tₙ₋₄, tₙ₋₃, tₙ₋₂, tₙ₋₁, tₙ), qui se suivent à intervalles temporels, qui présente pour chacun des instants (tₙ₋₄, tₙ₋₃, tₙ₋₂, tₙ₋₁, tₙ) les étapes suivantes:
- enregistrement d'images bidimensionnelles réelles des particules (1) avec différentes fonctions de reproduction active à l'instant (tₙ₋₄, tₙ₋₃, tₙ₋₂, tₙ₋₁, tₙ) respectif;
- spécification d'une distribution spatiale estimée des particules (1);
- calcul d'images bidimensionnelles virtuelles de la distribution spatiale estimée avec les différentes fonctions de reproduction;
- détection de différences (5) entre les images bidimensionnelles virtuelles et les images bidimensionnelles réelles avec les mêmes fonctions de reproduction; et
- modification de la distribution spatiale estimée des particules (1) pour la réduction des différences (5) afin d'obtenir une distribution spatiale approchée de la distribution spatiale effective des particules (1) à l'instant;
**caractérisé en ce que** la distribution spatiale estimée des particules (1) est spécifiée pour au moins un instant (tₙ) par le fait que les positions des particules (1) individuelles sont déplacées dans une distribution spatiale approchée obtenue pour un autre instant (tₙ₋₁) en fonction de la façon dont leurs positions se sont déplacées entre des distributions spatiales approchées pour au moins deux antres instants (tₙ₋₃, tₙ₋₂, tₙ₋₁).

2. Procédé selon la revendication 1, **caractérisé en ce que** la distribution spatiale approchée obtenue pour l'autre instant (tₙ₋₁) est la distribution spatiale qui a été obtenue pour le dernier instant (tₙ₋₁) situé avant le l'instant (tₙ) au moins au nombre de un ou pour l'instant suivant situé après l'instant (tₙ) au moins au nombre de un.

3. Procédé selon la revendication 1 ou 2, **caractérisé en ce que** les distributions spatiales approchées pour les au moins deux autres instants (tₙ₋₂, tₙ₋₁) incluent les distributions spatiales qui ont été obtenues pour le dernier et l'avant-dernier instant (tₙ₋₂, tₙ₋₁) situé avant l'instant (tₙ) au moins au nombre de un ou qui ont été obtenues pour l'instant qui suit après l'instant (tₙ) au moins au nombre de un et qui vient encore après lui.

4. Procédé selon l'une des revendications précédentes, **caractérisé en ce que** la distribution spatiale estimée des particules (1) est spécifiée pour au moins un instant (tₙ) par le fait que des trajectoires (6) des particules (1) individuelles sont définies à partir des distributions spatiales approchées pour les au moins deux autres instants (tₙ₋₂, tₙ₋₁) et sont extrapolées jusqu' à l'instant (tₙ) au moins au nombre de un.

5. Procédé selon la revendication 4, **caractérisé en ce que** les trajectoires (6) sont définies à partir des distributions spatiales approchées pour plus deux autres instants (tₙ₋₃, tₙ₋₂, tₙ₋₁).

6. Procédé selon la revendication 5, **caractérisé en ce que** des particules (1) ayant des trajectoires (6) discontinues sont identifiées et éliminées des distributions spatiales approchées.

7. Procédé selon la revendication 5 ou 6, **caractérisé en ce que** des particules (1) ayant des trajectoires (6) qui diffèrent de plus d'une valeur spécifiée de solutions de Navier-Stokes pour un écoulement d'un fluide inoculé avec les particules (1) sont identifiées et éliminées des distributions spatiales approchées.

8. Procédé selon l'une des revendications 5 à 7, **caractérisé en ce que,** lorsqu'une particule (1) dont la trajectoire a été suivie durant plusieurs instants antérieurs manque dans les images réelles enregistrées à un instant mais réapparaît dans les images réelles enregistrées à des instants ultérieurs sur un prolongement constant de la même trajectoire, une position de la particule (1) est complétée sur la trajectoire prolongée dans la distribution spatiale définie pendant un instant.

9. Procédé selon l'une des revendications précédentes, **caractérisé en ce que,** lors de la détection des différences (5) entre les images bidimensionnelles virtuelles et les images bidimensionnelles réelles avec les mêmes fonctions de reproduction, des particules (1) détectées manquant dans les images réelles sont éliminées de la distribution spatiale approchée.

10. Procédé selon l'une des revendications précédentes, **caractérisé en ce que,** lors de la détection de différences (5) entre les images bidimensionnelles virtuelles et les images bidimensionnelles réelles avec les mêmes fonctions de reproduction, des particules (1) supplémentaires détectées dans les images réelles sont enregistrées dans la distribution spatiale approchée.

11. Procédé selon l'une des revendications précédentes, **caractérisé en ce que** les distributions spatiales des particules pour des instants entre un premier instant (tₙ₊₃) et un deuxième instant (tₘ₋₃) bien plus ultérieur sont définies une fois en partant du premier instant (tₙ₊₃) pour des instants suivants (tₙ₊ᵢ₊₃) et une fois en partant du deuxième instant (tₘ₋₃) pour des instants précédents (tₘ₋ⱼ₋₃).

12. Procédé selon la revendication 11, **caractérisé en ce que** des particules (1) qui ne sont contenues que dans une des deux distributions spatiales définies pour un des instant entre le premier instant (tₙ₊₃) et le deuxième instant (tₘ₋₃) sont complétées dans l'autre distribution spatiale pour cet instant.

13. Procédé selon l'une des revendications précédentes, **caractérisé en ce que,** lors de la modification de la distribution spatiale estimée des particules (1) pour la réduction des différences (5), des positions dans l'espace de particules (1) qui sont très voisines les unes des autres dans la distribution spatiale estimée sont modifiées de façon coordonnée.
